# FASCICULE DE BREVET EUROPEEN

(11) **EP 1 679 567 B1**
(45) Date de publication et mention de la délivrance du brevet: **13.05.2009**
(21) Numéro de dépôt: 05111458.5
(22) Date de dépôt: 29.11.2005
(51) Int. Cl.: G05D 1/06, G01C 21/16, B64D 45/04, G01S 5/14

(54) **Architecture d'un système embarque d'aide au pilotage d'un aéronef**
Architektur eines Bordsystems zur Unterstützung der Steuerung von Luftschiffen
Architecture for a boarding system for helping the pilotage of an aircraft

(30) Priorité: 03.12.2004 FR 0412890
(43) Date de publication de la demande: 12.07.2006
(73) Titulaire: Thales, 92200 Neuilly Sur Seine (FR)
(72) Inventeur: Arethens, Jean-Pierre, 26760, BEAUMONT LES VALENCE (FR)
(74) Mandataire: Esselin, Sophie

(56) Documents cités:
- FR-A- 2 852 686
- US-B1- 6 178 363
- US-B1- 6 239 745
- US-B1- 6 424 914

## Description

La présente invention concerne un système d'aide au pilotage d'un aéronef, permettant en particulier le guidage de l'aéronef en phases d'approche de précision (atterrissage, décollage) et de manoeuvres à la surface. L'invention concerne plus particulièrement l'implémentation d'un système GLS d'atterrissage *("**GNSS** based **L**anding **S**ystem"*) basé sur un système de positionnement par satellites GNSS, qui réponde aux contraintes d'intégrité et de continuité des signaux de guidage pour les approches de catégorie I à III.

On rappelle que l'intégrité représente la probabilité que les signaux ne sont pas aléatoirement erronés et la continuité représente la probabilité que les signaux restent présents et utilisables pendant la phase d'approche. Le niveau d'intégrité est défini en pratique pour qu'il soit extrêmement improbable que le système de contrôle des surfaces (pilote automatique) qui contrôle les gouvernes de l'avion utilise des données de guidage fausses. Le niveau de continuité est défini en pratique pour qu'il soit extrêmement improbable que ce même système soit inopérant faute de données.

Dans l'invention, on s'intéresse plus particulièrement à une architecture d'un système de navigation et guidage à bord d'un aéronef, qui permette de répondre aux contraintes de continuité et d'intégrité des signaux de guidage qui seraient fournis dans un mode GLS, à partir des équipements actuels du marché qui autorisent seulement des opérations de navigation et guidage de catégorie I pour un tel mode. En particulier, des récepteurs multimodes MMR sont utilisés actuellement, qui implémentent les deux modes d'atterrissage ILS *("*I*nstrument Landing System* pour "Système d'atterrissage aux instruments") et MLS *(Microwave Landing System* pour "Système d'atterrissage hyperfréquence") qui ont reçu la certification des autorités concernées, pour être utilisés dans les opérations d'approche de catégorie I à III, et une fonction GNSS de positionnement par satellite, pour fournir des informations précises de navigation.

On rappelle que les systèmes GNSS peuvent être le système GPS américain, le système GLONASS russe, et le système GALILEO Européen, et recouvrent également des systèmes d'augmentation qui ont été développés pour améliorer les performances, en particulier la précision du système de positionnement par satellite considéré isolément.

Différents systèmes d'augmentation existent. Il y a les systèmes qui utilisent des données de correction différentielles des signaux GNSS, obtenues soit de satellites d'une autre constellation que la constellation GNSS (système d'augmentation SBAS pour le GPS) ou d'une station GNSS de référence au sol par une liaison de données radio fonctionnant en VHF (système d'augmentation GBAS). Un autre type d'augmentation consiste à utiliser des informations de localisation complémentaires fournies par les instruments à bord de l'aéronef (Système ABAS). La littérature est abondante sur le sujet.

Dans l'invention, on s'intéresse plus particulièrement au système d'augmentation par correction différentielle GBAS pour *"Ground Based Augmentation System"* ou LAAS *Local Area Augmentation System"'* utilisant une station au sol comprenant des récepteurs GNSS, qui transmet au MMR embarqué dans l'avion des données différentielles de correction de mesures de signaux GNSS qu'elle calcule à partir des mesures qu'elle effectue et de son positionnement connu et des trajectoires d'approches idéales. Un tel système d'augmentation est en effet intégré dans les récepteurs multimodes MMR du commerce. Il fournit en particulier les données PVT (Position, Vitesse, Temps) de l'aéronef à un système de gestion de vol à bord de l'aéronef ainsi que des informations de pilotage par rapport à la trajectoire idéale choisie par le pilote pour effectuer une approche vers un aéroport.

La précision des données GNSS dépend aussi de facteurs externes tels la disposition des satellites de la constellation GNSS, ou le nombre de satellites de la constellation "en vue". Par exemple, si les satellites ne sont pas bien disposés, la précision sur les données GNSS ne sera pas bonne. D'autres perturbations identifiées (panne aléatoire d'un satellite, interférence radiofréquence (RFI, ...) ou non identifiées peuvent encore affecter la réception des signaux GNSS et des signaux d'augmentation.

Si on ne sait pas gérer ces différentes perturbations, on sait par contre détecter en temps réel que les données GNSS sont en dehors de valeurs limites, et calculer en temps réel un niveau d'intégrité correspondant, par l'utilisation d'algorithmes garantissant un intervalle de confiance sur les informations de position élaborées par le système. En particulier, différents algorithmes correspondant aux différentes configurations du GNSS ont été définis voire standardisés, par exemple l'algorithme dit « HPL/VPL » dans le cas d'une configuration GNSS utilisant GPS et GBAS.

Aussi, les systèmes de navigation basés sur le GNSS prévoient la détection d'un défaut d'intégrité des données, pour couper le système le cas échéant : un problème d'intégrité est ainsi transformé en un problème de continuité, puisque les données GNSS ne sont plus disponibles.

En parallèle, des solutions d'hybridation avec le système de référence inertiel IRS de l'aéronef ont été proposées, pour résoudre ce problème de continuité, de façon à fournir des signaux de guidage en toutes circonstances, ayant la précision et l'intégrité requises.

Un système de référence inertiel est d'usage habituel dans les aéronefs. Il comprend des gyromètres et accéléromètres, et des moyens de traitement numérique pour intégrer les données de ces capteurs. De préférence, il comprend en outre des anémomètres, qui permettent d'obtenir la stabilité verticale du système inertiel. Le système de référence inertiel fournit notamment des données de position, de vitesse, de vitesse angulaires, d'accélérations, d'attitude, dans différents repères liés au porteur ou à la terre. Il peut fournir également des informations telles que la vitesse du vent, le cap magnétique, ....

Le principe d'un système GNSS-IRS hybride est le suivant : le système de navigation utilise les données GNSS (augmentées) très précises, tant qu'elles ont l'intégrité suffisante. Elles servent alors en outre à calculer les dérives à long terme (biais des capteurs) de l'unité IRS, permettant de recaler cette unité. Dès que l'intégrité des données GNSS n'est plus suffisante, la voie GNSS est coupée. Le système de navigation utilise alors les informations inertielles de position vitesse en provenance de la plateforme IRS.

Le système IRS étant intrinsèquement moins précis qu'un système de type GNSS, du fait du cumul dans le temps des erreurs sur les informations délivrées par les capteurs inertiels (erreurs de facteur d'échelle, de biais, variations avec la température...), son recalage par les informations PVT très précises fournies par le système GNSS, permet d'obtenir des informations inertielles avec la précision suffisante pendant le temps de coupure du GNSS, la dérive des capteurs ne jouant qu'à long terme.

Ainsi un système hybride GNSS (augmenté GBAS) IRS permet de fournir en toutes circonstances, par tous temps, des données PVT avec le niveau d'intégrité et de continuité requis, permettant d'envisager son utilisation pour des opérations d'approche de précision (catégorie III). Les niveaux d'intégrité et de continuité requis sont atteints, par le recalage temps réel du système de référence inertiel, et le basculement du système GNSS sur le système IRS recalé, en cas de problème d'intégrité des données GNSS. En particulier, de nombreux procédés d'hybridation de données avec filtrage et autres ont été développés pour améliorer ces systèmes hybrides GNSS-IRS, notamment pour détecter le problème d'intégrité des données GNSS suffisamment tôt pour qu'il n'entraîne pas une correction erronée des erreurs de biais dans le système de référence inertiel.

Ces données fournies par le système hybride GNSS-IRS permettent, en combinaison avec les signaux d'augmentation GBAS fournis par une station au sol prévue dans l'aéroport concerné, (ou les signaux d'augmentation SBAS), l'élaboration des signaux de guidage permettant des opérations d'approche sur cet aéroport.

On parle d'un système GLS d'atterrissage basé sur un système GNSS, augmenté par équipement inertiel.

Un tel système GLS offre en effet beaucoup d'avantages par rapport aux systèmes ILS et MLS utilisés actuellement pour les opérations d'approche de précision. En particulier les signaux satellites sont disponibles partout, l'augmentation différentielle GBAS (ou SBAS) permet d'obtenir la précision nécessaire et la maintenance opérationnelle d'un tel système est très facilitée, car il est quasi entièrement numérique.

Les systèmes d'aide à l'atterrissage ILS et MLS posent en effet un problème pratique de coût tant à l'achat qu'en maintenance. Notamment la protection d'une station sol ILS ou MLS contre les interférences qui gênent la transmission des données augmente les coûts opérationnels de ces systèmes. En particulier, pour garantir le haut niveau d'intégrité et de continuité des données de guidage requis dans des conditions de faible visibilité, l'utilisation des systèmes ILS ou MLS est soumises à des restrictions opérationnelles d'exploitation draconiennes. Aussi, en cas de faible visibilité, le nombre d'opérations de guidage par heure réalisées dans un aéroport chute de façon conséquente. Ceci pose un problème important dans tous les aéroports où les mauvaises conditions météorologiques sont courantes.

Pour toutes ces raisons, un système GLS est à priori très attractif comparé aux systèmes ILS ou MLS.

Un objet de l'invention, est de proposer un système GLS basé sur un système GNSS augmenté GBAS (ou SBAS) et une hybridation GNSS-IRS.

Un autre objet de l'invention est d'utiliser une architecture de navigation et guidage existante, avec les équipements du commerce, en particulier des récepteurs multimodes MMR de l'état de la technique, afin de proposer un système GLS à moindre coût.

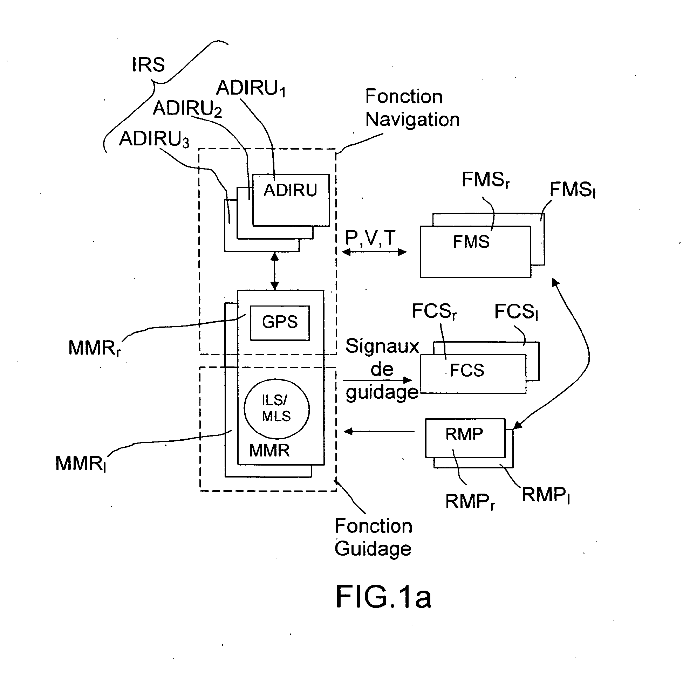

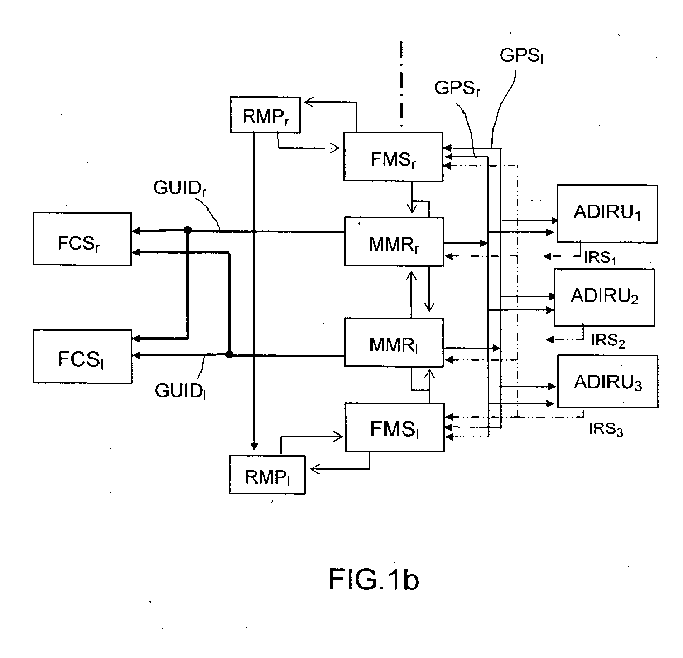

Un système de navigation et guidage de l'état de la technique à augmentation GBAS et hybridation GNSS-IRS est schématisé sur la figure 1. Il comprend principalement un système de gestion de vol FMS *("Flight Management System*"), un système de contrôle de vol FCS, une unité de commande radio RMP, un dispositif à récepteur multimode ILS/MLS MMR et un système de référence inertiel IRS.

Les données et signaux de commande transitent entre les différentes unités par des bus normalisés (bus ARINC).

Le système de gestion de vol FMS contrôle les différents équipements du système, notamment la sélection du mode de guidage, en fonction du plan de vol établi par le pilote (selon les possibilités de l'aéroport notamment), et la fourniture des informations et données nécessaires aux différents équipements, directement ou via l'unité de commande radio RMP (*radio management Panel*).

Le système de contrôle de surface FCS élabore les signaux de commande de surface (les gouvernes) de l'aéronef en fonction des signaux de guidage qu'il reçoit.

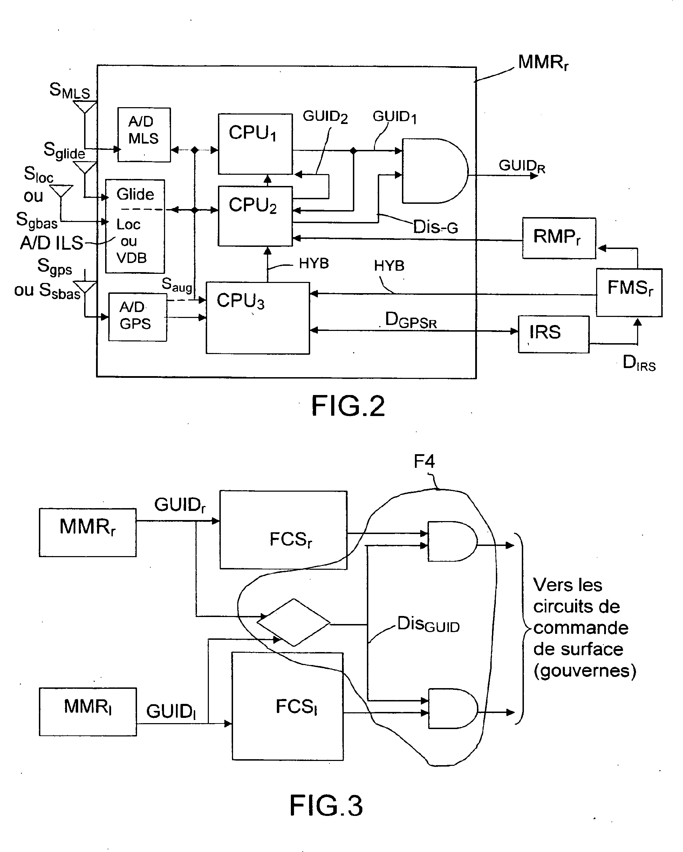

Un récepteur multimode MMRᵣ est détaillé sur la figure 2. Il fournit les signaux de guidage GUIDᵣ pour les opérations d'approche de précision, selon le mode de guidage MLS ou ILS contrôlé par l'unité de commande radio RMPᵣ, pour effectuer une approche adaptée en fonction des moyens disponibles sur l'aéroport concerné. En pratique, selon le concept "multimode", des étages spécifiques de réception et conversion analogique/numérique sont prévus pour les signaux S_{MLS} transmis par les stations sols MLS, et pour les signaux S_{glide} et S_{loc} transmis par les stations sols ILS.

Un équipement fournissant des informations de guidage pour réaliser des opérations de criticité maximale (atterrissage CATIII) doit garantir l'intégrité des traitements numériques qu'il réalise. Pour ce faire, il intègre un architecture duale : Des cartes de traitement numérique CPU₁, CPU₂ élaborent chacune des signaux de guidage GUID₁, GUID₂ respectivement, à partir des données reçues des stations sol selon le mode sélectionné. Ces cartes intègrent une fonction de contrôle mutuel des données élaborées, afin de garantir l'intégrité des traitements effectués et d'autoriser la sortie des données de guidage des signaux de guidage que si elles sont similaires. Ces aspects sont bien connus de l'homme de l'art. Les moyens de traitement numérique du module de guidage mettent en oeuvre les modules de traitement MLS ou ILS selon le choix du pilote. En sortie, on obtient des signaux de guidage GUIDᵣ. Selon le concept "look alike", ces signaux de guidage se présentent généralement selon le format normalisé bien connu du mode ILS.

Le dispositif à récepteur multimode fournit en sortie des données de guidage issus soit de la chaîne ILS, soit de la chaîne MLS pour des opérations d'approche de catégorie III vers le système FCS de contrôle des surfaces.

Il fournit encore des données de navigation (augmentées), notées D_{GPS}, à savoir notamment les informations PVT et un niveau d'intégrité associé, ainsi que les mesures de signaux satellites, vers le système IRS. Un étage de réception des signaux GNSS et un étage de réception des signaux d'augmentation GBAS et/ou SBAS sont prévus. En pratique, s'agissant des signaux d'augmentation GBAS, notés S_{aug} sur la figure 2, ceux-ci sont comme les signaux loc de l'ILS des signaux VHF qui peuvent éventuellement être acquis par le récepteur VHF de loc utilisé (S_{loc}) dans le mode ILS. Cependant, le récepteur MMR peut aussi comprendre une carte spécifique de réception et conversion A/D, carte appelée habituellement carte VDB (pour "*VHF Data Broadcast*"). Plus habituellement et comme représenté sur la figure 2, il utilise la carte de réception et conversion A/D des signaux de loc (S_{loc}) du mode ILS, cette carte couvrant généralement la plage de fréquence des signaux d'augmentation GBAS.

Le système IRS fournit des données PV inertielles, notées D_{IRS} sur la figure, au système de gestion de vol FMSᵣ. Le système FMSᵣ contrôle par ailleurs l'unité de commande radio RMPᵣ, en fonction des données PVT hybrides HYB et du plan de vol prévu. Cette unité RMPᵣ contrôle notamment le mode de navigation/guidage actif du récepteur MMRᵣ : ILS, MLS ou GLS. Notamment, avec les systèmes actuels de gestion de vol, les moyens de guidage offerts par l'aéroport sur lequel ou duquel se fait une opération d'approche, ainsi que les conditions météorologiques, conditionnent le choix du mode de guidage.

Par ailleurs, la chaîne de traitement GNSS reçoit du système IRSᵣ, les données PV hybrides HYB.

Comme représenté schématiquement sur les figures 1a, 1b et 2, une architecture d'un tel système de navigation doit être du type à détection de fautes intégrée, pour répondre aux contraintes d'intégrité et de continuité de l'application. On a ainsi habituellement dans les aéronefs une architecture du type double voir triple chaîne avec des fonctions de contrôle intégrées.

En effet, pour satisfaire aux impératifs d'intégrité et de continuité des signaux de guidage pour des opérations d'approche tous temps, il est nécessaire que chacun des équipements d'une chaîne de traitement des données de guidage présente un taux de défaillance très faible, typiquement inférieur à 10⁻⁹ erreur par heure de vol.

Ainsi, pour répondre aux niveaux d'intégrité et continuité requis, l'architecture d'un système embarqué d'aide au pilotage d'un aéronef et les équipements eux-mêmes de ce système doivent être du type à redondance double ou triple chaîne et intégrer des fonctions de contrôle interne, de manière à détecter une panne d'un élément individuel. On dit que le système et les équipements sont du type tolérants aux fautes, parce qu'ils intègrent des fonction de contrôle qui permettent de détecter les fautes et de fournir des alarmes.

Au niveau de l'architecture système classique, et comme représenté schématiquement sur la figure 1a, les différents équipements sont ainsi doublés ou triplés. Typiquement, le dispositif à récepteur multimode comprend deux récepteurs MMR, notés MMRᵣ et MMRₗ, le système de contrôle de vol FMS comprend deux unités, notées FMSᵣ et FMSₗ, le système de commande radio RMP comprend deux unités, notées RMPᵣ et RMPₗ, et le système de contrôle des surfaces comprend deux unités, notées FCSᵣ et FCSₗ. Des fonctions intégrées de détection de fautes sont intégrées, comme on le verra plus loin.

En ce qui concerne le système de référence inertiel, il comprend de manière habituelle une structure du type tolérante aux fautes (Fault Tolerant Inertial Reference System). Typiquement, un tel système a une architecture de type triple chaîne, avec trois bus d'entrée/sortie de données, au moins trois capteurs de chaque type et des moyens de traitement de signal associés. De préférence, le système IRS est du type à mesure de données anémométriques intégrée. On parle de système "FT/ADIRS" pour "Fault-Tolerant Air Data Inertial Reference System", la détection de fautes couvrant les chemins d'acquisition des données capteurs, et de traitement de ces données. Une représentation schématique courante d'un tel système du type triple chaîne est celle de trois unités en parallèle, notée ADIRU. Sur la figure 1a, on a ainsi un système IRS à triple chaîne ADIRU₁, ADIRU₂, ADIRU₃. Chaque unité comprend ses propres moyens de traitement numérique, et a son bus d'entrée/sortie associé. Habituellement, ces trois bus d'entrée/sortie sont reliés en entrée/sortie de la chaîne GNSS de chacun des récepteurs multimodes MMRᵣ et MMR_{I}, ainsi qu'aux systèmes de gestion de vol FMSᵣ et FMS_{I} comme représenté sur la figure 1b pour l'interface avec le bus d'entrée sortie de l'unité ADIRU₃ (pour ne pas surcharger la figure, les bus d'entrée/sortie avec ADIRU₁ et ADIRU₂ ne sont pas représentés).

Le système IRS fournit des données en sortie tant que deux au moins des unités sont détectées sans fautes. Des fonctions intégrées de comparaison et contrôle des données sont prévues, pour invalider un chemin de données ou un mode de guidage en cas de détection de fautes (non représentés). Particulièrement, les signaux de guidage GUIDᵣ et GUID_{I} fournis par les deux récepteurs MMRᵣ et MMR_{I} sont appliqués aux deux systèmes de contrôle des surfaces FCSᵣ et FCS_{I} qui effectuent un contrôle interne sur ces données. Sur la figure 3, on a illustré une fonction de contrôle intégrée F4 réalisée en pratique par chaque système de contrôle de surface FCSᵣ et FCS_{I} sur les données de guidage GUIDᵣ et GUID_{I}. En cas de divergence des données, un signal d'invalidation correspondant est émis, Dis_{guid} qui dans l'exemple illustré, empêche la transmission des signaux de sortie des pilotes automatiques (FCSᵣ et FCSₗ) vers les circuits de commande des gouvernes. Il peut aussi activer une alarme.

Au niveau des équipements, chaque récepteur embarqué multimode MMRᵣ, MMRₗ comprend habituellement une double chaîne de traitement numérique des signaux radiofréquences ILS ou microondes MLS. En effet une carte de traitement numérique ne permet généralement de garantir au mieux que 10⁻⁶ erreur par heure de vol supérieur au risque d'erreur toléré pour l'application, risque évalué typiquement à 10⁻⁹ erreur par heure de vol. Un tel niveau ne peut être atteint qu'en utilisant des architectures redondantes. Ainsi comme déjà décrit en relation avec la figure 2 pour le récepteur MMRᵣ, deux cartes de calcul numérique CPU₁ et CPU₂ sont ainsi prévues dans chaque récepteur. Ces cartes génèrent des signaux de guidage redondants GUID₁ et GUID₂. Une fonction de contrôle mutuel pour la détection de fautes est implémentée dans chaque carte pour commander des voyants d'alarme et empêcher la sortie des signaux de guidage du récepteur (signal Dis-G sur la figure 2).

Quant à la chaîne de réception des signaux radiofréquence ILS ou MLS, les cartes analogiques/numériques A/D de réception des signaux radiofréquence correspondants présentent habituellement des taux de défaillance bien inférieurs au risque d'erreur toléré pour l'application, risque évalué typiquement à 10⁻⁹ erreur par heure de vol. Aussi les récepteurs MMR ne comprennent t-ils qu'une carte de réception A/D par type de signal radiofréquence (Carte de réception pour les signaux S_{glide} et S_{loc} du mode ILS et Carte microondes pour les signaux S_{MLS} du mode MLS), dans le but de réduire les coûts des équipements et leur encombrement. On notera dans l'exemple représenté sur la figure 2, que les signaux d'augmentation S_{gbas} sont reçus par les mêmes moyens de réception que le signal de loc S_{loc} du système ILS.

Les signaux VHF de corrections GBAS sont traités par la carte numérique CPU1 pour extraire les données des messages transmis par la station sol. Il faut noter qu'il n'est pas nécessaire pour garantir l'intégrité de la réception de ces messages de dupliquer le traitement au niveau de la carte numérique CPU2, car ces messages intègrent un mécanisme de contrôle de type Code de Redondance Cyclique qui permet de garantir l'intégrité du décodage de leur contenu. Les signaux décodés sont alors transmis à la carte numérique CPU3 qui assure les traitements des fonctions GNSS.

La chaîne de réception et traitement des signaux GNSS est quant à elle habituellement monochaîne dans les récepteurs multimodes de l'état de l'art, sans fonction de contrôle interne. Ce système a en effet été conçu à l'origine uniquement pour la navigation et l'approche de catégorie I, c'est à dire pour une utilisation pendant les phases du plan de vol en dehors des phases d'approche et d'atterrissage en catégorie III plus critiques. On a donc un module de réception et conversion A/D des signaux GNSS, notés S_{GPS}, et éventuellement des signaux d'augmentation SBAS, notés S_{sbas}. Une unique carte de traitement numérique, CPU3 sur la figure, est ainsi prévue pour traiter les signaux GNSS (S_{GPS}), avec les signaux d'augmentation S_{aug} (SBAS ou GBAS), pour fournir les données en sortie D_{GPS} vers le système de référence inertiel et/ou le module du système de gestion de vol associé au récepteur, soit FMSᵣ pour le récepteur MMRᵣ.

On comprend bien que l'architecture du système avec une simple chaîne GNSS est insuffisante à répondre aux impératifs d'intégrité et de continuité requis par l'application en catégorie III. Notamment la carte CPU₃ a un taux de défaillance caractéristique bien trop élevé. Pour un équipement MMR permettant de fournir de manière autonome des écarts de guidage en mode GLS, II faudrait donc doubler la chaîne GNSS, au moins pour cette raison, à l'instar de la chaîne de calcul des données de guidage (CPU₁/CPU₂), pour atteindre les mêmes niveaux de tolérance aux fautes que ceux des modes de navigation ILS/MLS.

Une telle solution nécessite alors de revoir l'architecture actuelle des récepteurs embarqués multimodes, entraînant un coût important de développement, pour la définition, la mise au point et la certification de cette nouvelle architecture. En outre, les aspects d'hybridation des données GNSS-IRS, ajoutent de nouvelles contraintes de détection de fautes, en sorte que le doublage de la chaîne GNSS pourrait ne pas suffire à résoudre convenablement le problème, entraînant une révision plus complète de l'architecture système elle-même.

Dans l'invention, on cherche à proposer un système de navigation apte à offrir une prestation GLS de catégorie III, à moindre coût.

Un objet de l'invention est de proposer une solution pour un système GLS pour les opérations d'approche de précision catégorie III à partir des équipements existants, et plus particulièrement en utilisant l'architecture d'un système embarqué d'aide au pilotage des aéronefs, comprenant un dispositif de récepteurs multimode à système de positionnement par satellites GNSS et système d'augmentation intégré, typiquement un système GBAS/LAAS au moins, et/ou un système SBAS, et un système de référence inertiel avec hybridation GNSS-IRS.

L'idée à la base de l'invention est d'utiliser l'architecture existante, et de distribuer les différentes fonctions de traitement des signaux de guidage GLS de manière judicieuse, afin d'obtenir la redondance requise à chaque étape, en utilisant les différents éléments de cette architecture, les fonctions de contrôle intégrées et les liaisons physiques pré-existantes. La mise en oeuvre de l'invention consiste alors simplement en une modification des programmes implémentés dans les différentes cartes de traitement numériques de l'architecture.

Dans l'invention, on a identifié les différentes fonctions de traitement à répartir, qui comprennent les fonctions de traitement du processus de guidage à partir des données GNSS, mais aussi les fonctions de contrôle destinées à détecter une panne sur un élément individuel de la chaîne de traitement. Ces fonctions de contrôle doivent en effet elles-même assurer les niveaux d'intégrité et de continuité requis.

On montre qu'en s'appuyant uniquement sur l'architecture système existante et en répartissant de façon judicieuse les fonctions à réaliser, on obtient une architecture hybride GLS-IRS qui présente les niveaux d'intégrité et continuité suffisants pour assurer le guidage en approche de précision (catégorie III), par tous temps.

Une telle architecture hybride selon l'invention répond au besoin réel de systèmes de guidage de faible coût (achat, maintenance), précis et fiables pour les opérations d'approche de précision, quelles que soient les conditions météorologiques, et utilisables n'importe où dans le monde.

L'invention concerne ainsi un système d'aide au pilotage d'un aéronef, à hybridation GNSS-IRS, destiné à être embarqué dans un aéronef, comprenant un système de référence inertiel IRS comprenant au moins deux modules de référence inertiel fournissant chacun un jeu de données inertielles et au moins un premier récepteur multimode fournissant un premier jeu de signaux de guidage et un premier jeu de données GNSS augmentées, un deuxième récepteur multimode fournissant un deuxième jeu de signaux de guidage et un deuxième jeu de données GNSS augmentées, chaque récepteur comprenant deux cartes de traitement numérique avec une fonction de contrôle mutuel des données élaborées par chacune des dites cartes de traitement numérique pour fournir ledit jeu de signaux de guidage, et une unique carte de traitement de signaux GNSS augmentés, fournissant ledit jeu de données GNSS augmentées, caractérisé en ce qu'une fonction d'élaboration de données de guidage à partir des données GNSS et des données inertielles à détection de fautes intégrée est distribuée sur les dits modules de référence inertiel et les cartes de traitement numérique desdits récepteurs multimode.

Selon un aspect de l'invention, cette distribution est telle que :
- le premier jeu de données GNSS augmentées et le deuxième jeu de données GNSS augmentées sont appliqués en entrée sur chacun des modules de référence inertiel, chaque module de référence inertiel comprenant une fonction intégrée de comparaison des dits jeux de données, pour invalider le cas échéant la transmission des dits jeux de données,
- chaque module de référence inertiel applique une fonction d'hybridation entre l'un desdits jeux de données GNSS transmis et les données inertielles que ledit module fournit, pour délivrer un jeu de données hybrides,
- les cartes de traitement numérique de chaque récepteur multimode intègrent chacune une fonction de comparaison des jeux de données hybride fournis par les modules de référence inertiel, pour fournir le cas échéant un signal de détection de fautes, une fonction d'élaboration de données de guidage correspondantes et une fonction de contrôle desdites données de guidage avec les données de guidage établies par l'autre carte.

L'invention concerne aussi une utilisation dans un aéronef d'un tel système d'aide au pilotage pour mettre en oeuvre un guidage GLS à augmentation inertielle pour des opérations d'approche de catégories I à III.

D'autres avantages et caractéristiques de l'invention apparaîtront plus clairement à la lecture de la description qui suit, faite à titre indicatif et non limitatif de l'invention et en référence aux dessins annexés, dans lesquels :
- la figure 1a illustre une architecture d'un système embarqué d'aide au pilotage d'un aéronef à hybridation GNSS-IRS selon l'état de la technique ;
- la figure 1b détaille les liaisons entrées/sorties entre les différents équipements de l'architecture ;
- la figure 2 illustre schématiquement l'architecture redondante d'un récepteur embarqué multimode MMR selon l'état de la technique ;
- la figure 3 illustre une fonction de détection de faute intégrée, associée aux données de guidage fournies par les récepteurs MMRᵣ et MMRₗ du système embarqué de la figure 1 ;
- la figure 4 est un schéma-bloc de l'architecture système, avec une représentation de la distribution des fonctions de la chaîne de traitement GLS;
- la figure 5 correspond à la figure 1b, adaptée à une mise en oeuvre d'une distribution des fonctions GLS selon l'invention ;
- la figure 6 est un schéma-bloc des fonctions réalisées par les éléments de l'architecture système de référence inertielles IRS,
- la figure 7 est un schéma-bloc des fonctions réalisées par les récepteurs MMRᵣ et MMRₗ du dispositif de réception multimode et les unités FCSᵣ et FCSₗ du système de contrôle des surfaces FCS; et
- la figure 8 illustre en détail les fonctions de traitement et contrôle réalisées sur les données hybrides dans un récepteur.

Dans la suite, et en référence aux figures, on utilise les notations suivantes :
- D_{GPSr}, D_{GPSI} désignent les données obtenues à partir des signaux GNSS S_{GPS} et des signaux d'augmentation S_{aug}, typiquement les signaux d'augmentation GBAS, ou encore les signaux d'augmentation SBAS. Ces données sont fournies en sortie des récepteurs MMRᵣ, MMR_{I} respectivement.
- IRSᵢ désigne les données inertielles fournies par l'unité i de référence inertielle ADIRUᵢ du système IRS sur un bus d'entrée sortie associé.
- HYBᵢ désigne les données hybrides entre des données D_{GPSr} et/ou D_{GPSI} et les données inertielles de l'unité ADIRU*ᵢ* du système de référence inertielle.

Une distribution selon l'invention des fonctions de la chaîne de traitement GLS s'appuie sur les structures redondantes existantes du système de navigation tel que précédemment décrit et illustré sur les figures 1a, 1b et 2. Notamment cette distribution s'appuie sur les liaisons prévues entre les différents équipements, notamment, l'interface entre l'unité GNSS de chaque MMR, MMR₁ et MMR₂ et chacun des bus d'entrée/sortie des trois unités ADIRU₁, ADIRU₂ et ADIRU₃ du système de référence inertiel IRS comme illustré sur la figure 1 b.

Plus particulièrement, l'invention se propose d'utiliser la structure triple chaîne du système IRS d'une part et la double redondance interne et système du dispositif à récepteurs multimode : redondance système avec les deux récepteurs MMR₁ et MMR₂, et redondance interne de ces récepteurs MMRᵣ et MMRₗ avec les cartes CPU₁ et CPU₂ avec fonction de détection de faute intégrée, pour implémenter un mode de guidage GLS, utilisant les signaux GNSS, les signaux d'augmentation (GBAS ou SBAS) et une hybridation des systèmes GNSS et IRS, dans une chaîne de traitement du type tolérante aux fautes.

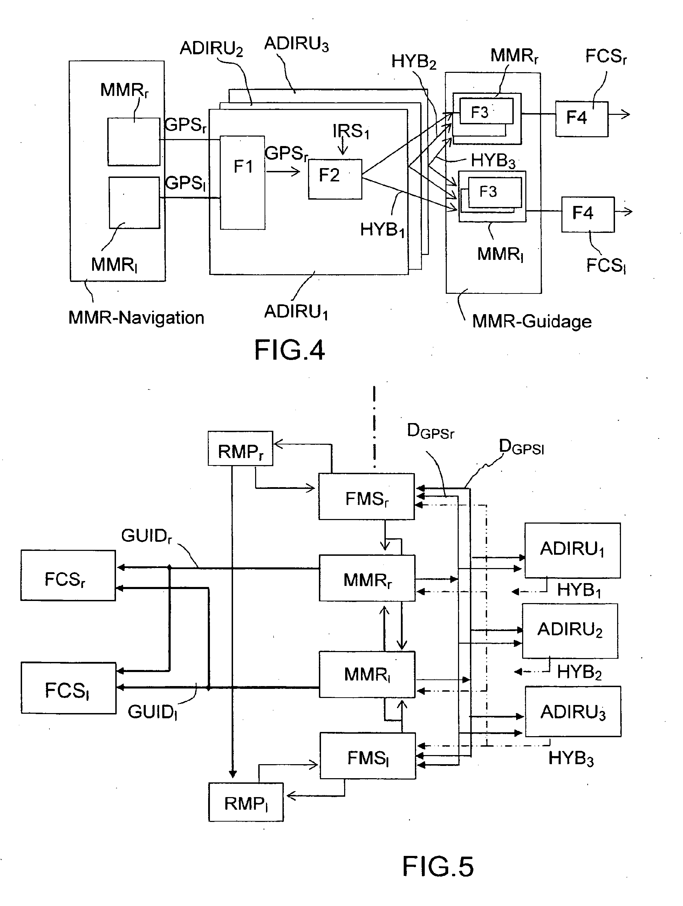

Selon l'invention, cette chaîne de traitement des données de guidage GLS, du type tolérante aux fautes est obtenue de façon très performante en s'appuyant sur un découpage du traitement en quatre fonctions principales F1 à F4, comme représenté sur la figure 4, et une distribution de ces fonctions sur le système de référence inertiel IRS et sur les cartes numériques CPU₁ et CPU₂ des récepteurs multimodes MMRᵣ et MMR_{I}.

On peut séparer ces fonctions F1 à F4 en deux groupes selon qu'elles sont traitées dans la partie navigation (IRS) ou dans la partie guidage (récepteurs multimodes, unités du système de contrôle des surfaces).

Dans la partie navigation, on définit les deux fonctions F1 et F2 suivantes :
- F1 : contrôle d'intégrité des données GNSS fournies par chacun des récepteurs MMR₁ et MMR₂ de l'architecture système.
- F2 : fonction d'hybridation des données GNSS et des données inertielles.

Dans la partie guidage, on définit les deux fonctions F3 et F4 suivantes :
- F3 : contrôle d'intégrité des données hybrides et élaboration des données de guidage GLS.
- F4 : contrôle d'intégrité des données de guidage GLS.

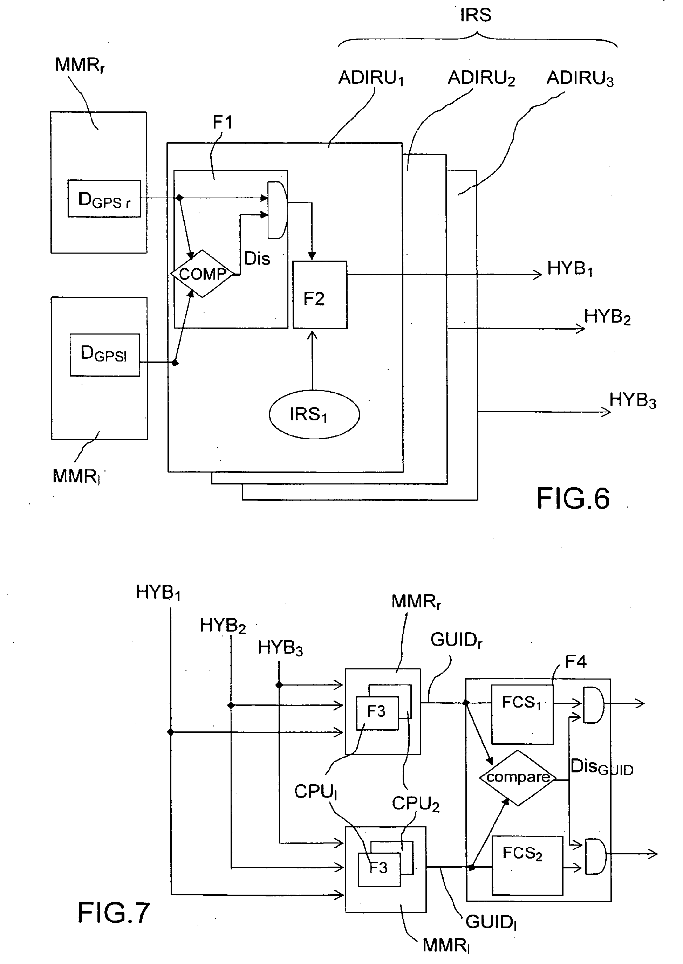

Les fonctions F1 et F2 sont schématiquement représentées sur la figure 6. Le récepteur MMRᵣ fournit des données D_{GPSr} et le récepteur MMRₗ fournit des données D_{GPSI} de leur chaîne respective d'acquisition et traitement des signaux GNSS S_{GPS} et des signaux d'augmentation S_{aug}.

Ces données sont fournies à chacune des unités ADIRU₁, ADIRU₂, ADIRU₃ du système IRS.

Chaque unité ADIRUᵢ implémente les fonctions F1 et F2, dans un dispositif de calcul numérique respectif. Ces fonctions sont détaillées dans l'exemple pour ADIRU₁ en référence avec la figure 6.

La fonction F1 contrôle l'intégrité des données D_{GPSr} et D_{GPSI}, typiquement en les comparant. Si par convention D_{GPSr} représente les données du "chemin principal" et D_{GPSI} représente les données du "chemin de contrôle", la fonction F1 valide la transmission des données D_{GPSr} du "chemin principal" vers la fonction suivante F2, si le contrôle d'intégrité effectué est positif. Sinon, un signal d'invalidation et/ou d'alarme est généré, qui empêche le passage à la fonction F2 suivante.

La fonction F2 consiste à mettre en oeuvre des algorithmes d'hybridation entre les données D_{GPSr} et les données inertielles de l'unité du système IRS concernée, ADIRU₁ dans l'exemple. Les algorithmes d'hybridation sont bien connus de l'homme du métier. Ils ne font pas l'objet de l'invention. Ils ne seront donc pas détaillés. Rappelons juste qu'en fonction du niveau d'intégrité GNSS transmis dans les données D_{GPSr}, cette fonction fournit comme données hybrides pour la navigation, soit les données GNSS qu'elle utilise alors pour recaler les capteurs de cette unité ADIRU₁, soit les données IRS₁ de cette unité ADIRU₁.

On notera cependant que l'implémentation de la fonction d'hybridation dans les unités ADIRUᵢ est particulièrement avantageuse, car elle se situe au plus près des capteurs inertiels, sur les mesures desquelles elle doit appliquer des corrections calculées à partir des données GNSS (recalage).

La fonction F2 fournit en sortie les données hybrides PVT. On obtient donc en sortie de chaque unité ADIRU₁, ADIRU₂, ADIRU₃, des données hybrides correspondantes HYB₁, HYB₂, HYB₃, respectivement.

Ces données sont transmises aux deux systèmes de gestion de vol FMSᵣ et FMSₗ et aux deux récepteurs MMRᵣ et MMRₗ, par le bus d'entrée sortie de chaque ADIRUᵢ. Ainsi, si on compare les figures 1b et 5, cette dernière représentant la mise en oeuvre de l'invention sur l'architecture système de la figure 1b, ce ne sont plus les données inertielles IRS₁, IRS₂, IRS₃ qui transitent sur les bus d'entrée/ sortie des unités ADIRUᵢ, mais les données issues de l'hybridation : HYB₁, HYB₂, HYB₃.

Les fonctions F3 et F4 réalisées dans la partie guidage sont schématiquement représentées sur la figure 7.

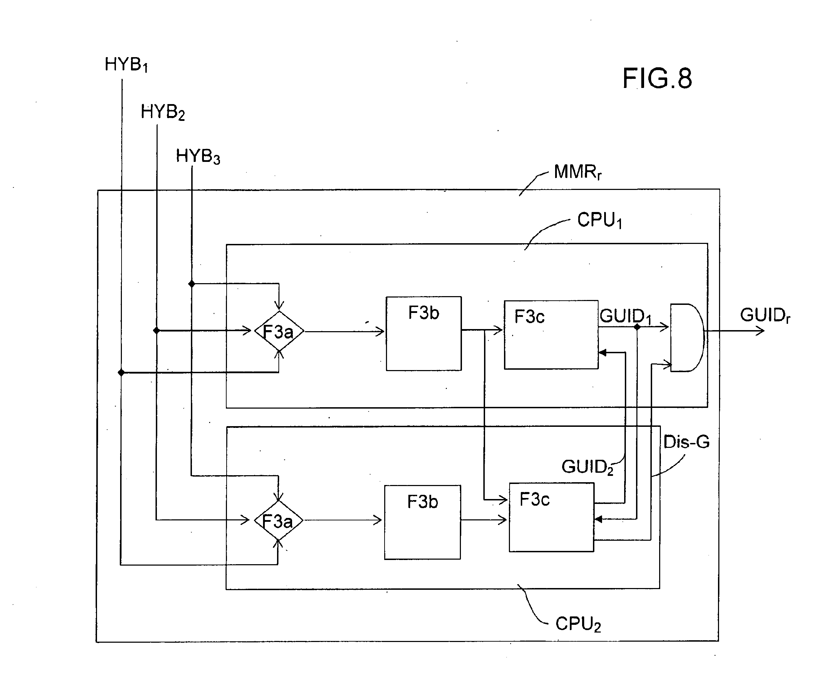

La fonction F3 est plus particulièrement détaillée sur la figure 8. Elle est mise en oeuvre dans les cartes CPU₁ et CPU₂ de chacun des récepteurs MMRᵣ et MMR_{I}, utilisant ainsi la double redondance interne et système de ces équipements. Elle comprend une fonction de contrôle d'intégrité F3a, une fonction de calcul de guidage F3b, et une fonction F3c de contrôle mutuel des données de guidage fournies par chaque carte.

Le contrôle d'intégrité F3a est mis en oeuvre dans chaque carte CPU₁ et CPU₂ pour contrôler les données hybrides HYB₁, HYB₂, HYB₃ issues des trois unités ADIRUᵢ. Ce contrôle s'effectue typiquement selon la règle suivante : tant que deux jeux de données hybrides au moins coïncident, elles sont validées. Par exemple chaque carte CPU applique sur les données hybrides validées, par exemple HYB₁, la fonction F3b, qui consiste à appliquer les algorithmes d'élaboration des signaux de guidage et de mise au format de sortie normalisé, typiquement le format ILS. On retrouve alors la fonction F3c de contrôle mutuel déjà décrite en relation avec la figure 2, qui valide ou invalide (Dis-G) les données de la voie principale, dans l'exemple les données de sortie GUID₁ de la carte CPU₁, par comparaison mutuelle des données GUID₁ et GUID₂ fournies par les cartes CPU₁, et CPU₂ respectivement.

La fonction F4 est la fonction de contrôle interne des données de guidage GUIDᵣ et GUIDₗ issues respectivement du récepteur MMRᵣ et MMRₗ, implémentée dans les systèmes de contrôle des surfaces FCSᵣ et FCSₗ comme déjà décrit en relation avec la figure 3.

La distribution du traitement des données de guidage en mode GLS sur l'architecture à double récepteur MMR et triple chaîne inertielle de l'état de la technique, permet d'obtenir la redondance que la simple chaîne d'acquisition GNSS ne peut seule satisfaire.

La mise en oeuvre de l'invention ne nécessite, comme on vient de le voir, que l'implémentation de fonctions supplémentaires dans les unités de calcul numériques des équipements MMR et IRS, sans modification de l'architecture tant au niveau des équipements que des interfaces matérielles. Ceci ne pose pas de problèmes particuliers et se fait à moindre coût.

Les fonctions de contrôle interne utilisées F1, F3a, F3c et F4 sont en pratique des fonctions bien connues de l'homme du métier qui sait les implémenter facilement. Leur implémentation telle qu'illustrée ne saurait être une limitation de la portée de l'invention.

Par ailleurs, l'invention s'applique aussi bien à des architectures à système IRS du type à chaîne double, et non triple. Les modifications qui en résultent consistent principalement pour la fonction F3 à ne recevoir en entrée que deux jeux de données hybrides.

Enfin, les signaux d'augmentation peuvent être du type GBAS et/ou SBAS.

L'invention s'applique au domaine de l'avionique en général, pour une implémentation d'un mode de guidage GLS dans un système à hybridation GNSS - IRS, du type à double récepteur multimode et système de référence inertiel à architecture redondante, utilisant des signaux d'augmentation GBAS, et/ou SBAS, permettant des opérations d'approche de précision de catégories I à III.

## Revendications

1. Système d'aide au pilotage d'un aéronef, à hybridation GNSS-IRS, destiné à être embarqué dans un aéronef, comprenant un système de référence inertiel IRS comprenant au moins deux modules de référence inertiel (ADIRU₁, ADIRU₂, ADIRU₃), fournissant chacun un jeu de données inertielles (IRS₁, IRS₂, IRS₃), et au moins un premier récepteur multimode (MMRᵣ) fournissant un premier jeu de signaux de guidage (GUIDᵣ) et un premier jeu de données GNSS augmentées (D_{GPSr}), un deuxième récepteur multimode (MMR_{I}) fournissant un deuxième jeu de signaux de guidage (GUID_{I}) et un deuxième jeu de données GNSS augmentées (D_{GPSI}), chaque récepteur comprenant deux cartes de traitement numérique (CPU₁, CPU₂) avec une fonction de contrôle mutuel (F3c) des données élaborées par chacune des dites cartes de traitement numérique pour fournir ledit jeu de signaux de guidage, et une unique carte de traitement de signaux GNSS augmentés, fournissant ledit jeu de données GNSS augmentées, **caractérisé en ce qu'**une fonction d'élaboration de données de guidage à partir des données GNSS et des données inertielles (IRS₁) à détection de fautes intégrée est distribuée sur lesdits modules de référence inertiel et lesdites cartes de traitement numérique desdits récepteurs multimode.

2. Système d'aide au pilotage d'un aéronef selon la revendication 1,
**caractérisé en ce que**
- le premier jeu de données GNSS augmentées (D_{GPSr}) et le deuxième jeu de données GNSS augmentées (D_{GPSI}) sont appliqués en entrée sur chacun des modules de référence inertiel, chaque module de référence inertiel comprenant une fonction intégrée (F1) de comparaison des dits jeux de données, pour invalider le cas échéant la transmission des dits jeux de données,
- chaque module de référence inertiel (ADIRU₁) applique une fonction d'hybridation (F2) entre l'un des dits jeux de données GNSS transmis et les données inertielles (IRS₁) que ledit module fournit, pour délivrer un jeu de données hybrides (HYB₁),
- les cartes de traitement numérique (CPU₁, CPU₂) de chaque récepteur multimode (MMRᵣ, MMR_{I}) intègrent chacune une fonction (F3a) de comparaison des jeux de données hybride fournis par les modules de référence inertiel, pour fournir le cas échéant un signal de détection de fautes, une fonction d'élaboration de données de guidage correspondantes (F3b) et une fonction de contrôle (F3c) desdites données de guidage avec les données de guidage établies par l'autre carte.

3. Système d'aide au pilotage d'un aéronef selon la revendication 1 ou 2, **caractérisé en ce que** le système de référence inertiel (IRS) comprend trois modules de référence inertiel.

4. Système d'aide au pilotage d'un aéronef selon l'une des revendications précédentes, **caractérisé en ce que** le système de référence inertiel est du type à données anémométriques.

5. Système d'aide au pilotage d'un aéronef selon l'une des revendications précédentes, **caractérisé en ce que** les données GNSS augmentées sont du type à augmentation GBAS et/ou SBAS.

6. Utilisation dans un aéronef d'un système d'aide au pilotage selon l'une quelconque des revendications précédentes, pour mettre en oeuvre un guidage GLS à augmentation inertielle pour des opérations d'approche de catégories I à III.

## Claims

1. Aircraft piloting aid system, with GNSS-IRS hybridation, designed for onboard installation in an aircraft, comprising an inertial reference system IRS with at least two inertial reference units (ADIRU₁, ADIRU₂, ADIRU₃), each supplying a set of inertial data (IRS₁, IRS₂, IRS₃), and at least a first multimode receiver (MMRᵣ) supplying a first set of guidance signals (GUIDᵣ) and a first set of augmented GNSS data (D_{GPSr}), a second multimode receiver (MMR₁) supplying a second set of guidance signals (GUID₁) and a second set of augmented GNSS data (D_{GPSl}), each receiver including two digital processing boards (CPU₁, CPU₂) with a mutual checking function (F3c) for the data generated by each of said digital processing boards to supply said set of guidance signals, and a single augmented GNSS signal processing board, supplying said set of augmented GNSS data, **characterized in that** a function for generating guidance data from the GNSS data and the inertial data (IRS₁) with integrated fault detection is distributed on said inertial reference units and said digital processing boards of said multimode receivers.

2. Aircraft piloting aid system according to Claim 1,
**characterized in that**
- the first set of augmented GNSS data (D_{GPSr}) and the second set of augmented GNSS data (D_{GPS1}) are applied as input to each of the inertial reference units, each inertial reference unit including an integrated function (F1) for comparing said sets of data, to disable the transmission of said sets of data if appropriate,
- each inertial reference unit (ADIRU₁) applies a hybridation function (F2) between one of said sets of transmitted GNSS data and the inertial data (IRS₁) that said unit supplies, to deliver a set of hybrid data (HYB₁),
- the digital processing boards (CPU₁, CPU₂) of each multimode receiver (MMRᵣ, MMR₁) each incorporate a function (F3a) for comparing the sets of hybrid data supplied by the inertial reference units, to supply, if appropriate, a fault detection signal, a function for generating corresponding guidance data (F3b) and a function (F3c) for checking said guidance data with the guidance data created by the other board.

3. Aircraft piloting aid system according to Claim 1 or 2, **characterized in that** the inertial reference system (IRS) includes three inertial reference units.

4. Aircraft piloting aid system according to one of the preceding claims, **characterized in that** the inertial reference system is of the anemometric data type.

5. Aircraft piloting aid system according to one of the preceding claims, **characterized in that** the augmented GNSS data is of the type with GBAS and/or SBAS augmentation.

6. Use in an aircraft of a piloting aid system according to any one of the preceding claims, to implement an inertially augmented GLS guidance for category I to III approach operations.

## Patentansprüche

1. Luftfahrzeug-Steuerungshilfesystem mit GNSS-IRS-Hybridisierung, das zum Einbau in ein Luftfahrzeug bestimmt ist, mit einem IRS-Trägheitsreferenzsystem, welches mindestens zwei Trägheitsreferenzmodule (ADIRU₁, ADIRU₂, ADIRU₃) aufweist, die je einen Satz von Trägheitsdaten (IRS₁, IRS₂, IRS₃) liefern, und mit mindestens einem ersten Multimode-Empfänger (MMRᵣ), der einen ersten Satz von Lenksignalen (GUIDᵣ) und einen ersten Satz von erweiterten GNSS-Daten (D_{GPSr}) liefert, einem zweiten Multimode-Empfänger (MMR₁), der einen zweiten Satz von Lenksignalen (GUID₁) und einen zweiten Satz von erweiterten GNSS-Daten (D_{GPS1}) liefert, wobei jeder Empfänger zwei digitale Verarbeitungskarten (CPU₁, CPU₂) mit einer Funktion der gegenseitigen Überprüfung (F3c) der von jeder der digitalen Verarbeitungskarten erarbeiteten Daten, um den Satz von Lenksignalen zu liefern, und eine einzige Karte zur Verarbeitung von erweiterten GNSS-Signalen aufweist, die den Satz von erweiterten GNSS-Daten liefert, **dadurch gekennzeichnet, dass** eine Funktion der Erarbeitung von Lenkdaten ausgehend von den GNSS-Daten und von den Trägheitsdaten (IRS₁) mit integrierter Fehlererfassung auf die Trägheitsreferenzmodule und die digitalen Verarbeitungskarten der Multimode-Empfänger verteilt wird.

2. Luftfahrzeug-Steuerungshilfesystem nach Anspruch 1, **dadurch gekennzeichnet, dass**
- der erste Satz von erweiterten GNSS-Daten (D_{GPSr}) und der zweite Satz von erweiterten GNSS-Daten (D_{GPSl}) an den Eingang jedes Trägheitsreferenzmoduls angelegt werden, wobei jedes Trägheitsreferenzmodul eine integrierte Funktion (F1) des Vergleichs der Datensätze aufweist, um ggf. die Übertragung der Datensätze zu verhindern,
- jedes Trägheitsreferenzmodul (ADIRU₁) eine Hybridisierungsfunktion (F2) zwischen einem der übertragenen GNSS-Datensätze und den Trägheitsdaten (IRS₁) anwendet, die das Modul liefert, um einen Satz von hybriden Daten (HYB₁) auszugeben,
- die digitalen Verarbeitungskarten (CPU₁, CPU₂) jedes Multimode-Empfängers (MMRᵣ, MMR₁) je eine Funktion (F3a) des Vergleichs der von den Trägheitsreferenzmodulen gelieferten Hybriddatensätze, um ggf. ein Fehlerfassungssignal zu liefern, eine Funktion der Erarbeitung von entsprechenden Lenkdaten (F3b) und eine Funktion der Überprüfung (F3c) der Lenkdaten mit den von der anderen Karte erstellten Daten umfassen.

3. Luftfahrzeug-Steuerungshilfesystem nach Anspruch 1 oder 2, **dadurch gekennzeichnet, dass** das Trägheitsreferenzsystem (IRS) drei Trägheitsreferenzmodule aufweist.

4. Luftfahrzeug-Steuerungshilfesystem nach einem der vorhergehenden Ansprüche, **dadurch gekennzeichnet, dass** das Trägheitsreferenzsystem vom Typ mit anemometrischen Daten ist.

5. Luftfahrzeug-Steuerungshilfesystem nach einem der vorhergehenden Ansprüche, **dadurch gekennzeichnet, dass** die erweiterten GNSS-Daten vom Typ mit GBAS-und/oder SBAS-Erweiterung sind.

6. Verwendung eines Steuerungshilfesystems in einem Luftfahrzeug nach einem der vorhergehenden Ansprüche zur Durchführung einer GLS-Lenkung mit Trägheitserweiterung für Anflugoperationen der Kategorien I bis III.
